# FASCICULE DE BREVET EUROPEEN

(11) **EP 1 132 229 B1**
(45) Date de publication et mention de la délivrance du brevet: **16.06.2010**
(21) Numéro de dépôt: 01105680.1
(22) Date de dépôt: 07.03.2001
(51) Int. Cl.: B60H 1/32, F25B 47/00, F25D 21/04, F25B 5/04

(54) **Dispositif de climatisation de véhicule comportant un échangeur de chaleur polyvalent**
Kraftfahrzeugklimaanlage mit einem Mehrzweckwärmetauscher
Vehicle air-conditioning device with a multi-purpose heat exchanger

(30) Priorité: 10.03.2000 FR 0003126
(43) Date de publication de la demande: 12.09.2001
(73) Titulaire: VALEO SYSTEMES THERMIQUES, 78321 Le Mesnil St Denis Cedex (FR)
(72) Inventeur: Ben Fredj, Mounir, 170-0031 Tokyo (JP); Hamery, Bruno, 75005 Paris (FR); Thuez, Jean-Luc, 78100 Saint Germain en Laye (FR); Khelifa, Noureddine, 96450 Coburg (DE)

(56) Documents cités:
- DE-A- 3 820 811
- GB-A- 2 150 278
- US-A- 4 648 247
- PATENT ABSTRACTS OF JAPAN vol. 009, no. 313 (M-437), 10 décembre 1985 (1985-12-10) & JP 60 148716 A (FUJI JUKOGYO KK), 6 août 1985 (1985-08-06)

## Description

L'invention concerne la climatisation de l'habitacle des véhicules automobiles.

On fait appel communément pour cette fonction à un circuit de fluide réfrigérant comportant un compresseur, un condenseur servant de puits de chaleur, un détendeur, un premier évaporateur servant de source de froid, un second évaporateur, et des moyens de commutation. Le document DE 38 20811, qui est considéré comme l'état de l'art le plus proche, décrit un tel dispositif, dans lequel les moyens de commutation permettent de faire circuler le fluide réfrigérant dans les deux évaporateurs, soit en parallèle, soit en série, afin de permettre l'utilisation du dispositif comme pompe à chaleur.

Le but de l'invention est d'améliorer la production de froid pour un encombrement donné de la source de froid.

L'invention vise notamment un dispositif de climatisation de l'habitacle d'un véhicule automobile comprenant un circuit de fluide réfrigérant comportant un compresseur, un condenseur servant de puits de chaleur, un premier évaporateur servant de source de froid, et un second évaporateur.

Selon l'invention, ledit circuit comporte en outre des moyens de commutation propres à faire circuler le fluide soit seulement dans le premier évaporateur, soit dans les deux évaporateurs, en fonction de la puissance frigorifique requise, les premier et second évaporateurs étant traversés l'un après l'autre au moins en partie par un flux d'air à refroidir, l'un des premier et second évaporateurs formant, avec un radiateur de chauffage de l'habitacle, un échangeur de chaleur mixte dans lequel le flux d'air à refroidir ou a réchauffer est en contact thermique à la fois avec le fluide réfrigérant dudit circuit et avec un fluide caloporteur alimentant ledit radiateur.

Le remplacement d'un évaporateur unique par deux évaporateurs d'un volume total au plus égal au volume de l'évaporateur unique favorise l'élimination des condensats provenant de l'air humide, réduisant ainsi l'épaisseur du film d'eau qui fait obstacle aux échanges de chaleur entre l'air et le fluide réfrigérant et qui provoque une perte de charge dans le flux d'air. La production de froid est donc augmentée.

L'invention facilite en outre la gestion de la puissance frigorifique en mettant en service les deux évaporateurs ou l'un d'eux seulement en fonction des besoins.

Des caractéristiques optionnelles de l'invention, complémentaires ou alternatives, sont énoncées ci-après:
- Les moyens de commutation sont propres en outre à faire circuler le fluide seulement dans le second évaporateur.
- Les moyens de commutation sont propres à faire circuler le fluide en alternance dans les premier et second évaporateurs.
- Les premier et second évaporateurs ont des capacités de production de froid différentes.
- Les moyens de commutation comportent des moyens pour faire circuler le fluide dans une boucle de chauffage additionnel contenant le second évaporateur et ne contenant pas le condenseur ni le premier évaporateur, le second évaporateur servant alors de source de chaleur.
- La boucle de chauffage additionnel contient, entre la sortie du second évaporateur et l'entrée du condenseur, un détendeur en parallèle avec des moyens de dérivation obturables permettant au fluide de traverser ce détendeur lorsque le second évaporateur sert de source de chaleur et de l'éviter lorsque le second évaporateur sert de source de froid.
- Ledit circuit comporte un module unitaire relié à l'entrée du compresseur, à la sortie du condenseur, à l'entrée et à la sortie du premier évaporateur, à un point de jonction extérieur situé entre la sortie du compresseur et l'entrée du second évaporateur et à la sortie de ce dernier, ledit module contenant au moins un clapet anti-retour disposé entre la sortie du premier évaporateur et l'entrée du compresseur, un point de jonction intérieur relié à la sortie du condenseur, un premier détendeur interposé entre le point de jonction intérieur et l'entrée du premier évaporateur, et une vanne d'arrêt et un second détendeur interposés entre le point de jonction intérieur et l'entrée du second évaporateur.
- La boucle de chauffage additionnel contient en outre, entre le second évaporateur et le compresseur, un détendeur suivi d'un échangeur de chaleur complémentaire propre à extraire de la chaleur d'un milieu extérieur, et fonctionne comme pompe à chaleur.
- Des moyens sont prévus pour permettre au fluide de contourner l'échangeur de chaleur complémentaire et le détendeur associé lorsqu'il circule dans les deux évaporateurs.
- Les moyens de commutation sont propres à faire circuler le fluide sortant du compresseur, d'abord dans le second évaporateur, qui joue alors le rôle de condenseur, puis dans deux branches en parallèle contenant respectivement le premier évaporateur et le condenseur, qui joue alors le rôle d'évaporateur, avant de le ramener au compresseur.
- Les deux évaporateurs en tant que sources de froid sont disposés mutuellement en parallèle dans le circuit.
- Les deux évaporateurs en tant que sources de froid sont disposés mutuellement en série dans le circuit.
- Le circuit comporte en outre des moyens pour régler le débit et/ou la pression du fluide envoyé dans les évaporateurs en fonction de la pression et/ou de la température du fluide sortant de l'un et/ou de l'autre des évaporateurs.
- L'un des premier et second évaporateurs forme, avec un radiateur de chauffage de l'habitacle, un échangeur de chaleur mixte dans lequel un flux d'air à refroidir ou à réchauffer est en contact thermique à la fois avec le fluide réfrigérant dudit circuit et avec un fluide caloporteur alimentant ledit radiateur.
- Ledit échangeur de chaleur mixte comprend deux boîtes à fluide alimentées respectivement en fluide réfrigérant et en fluide caloporteur, situées à l'opposé l'une de l'autre par rapport à un faisceau de tubes, chaque tube ayant une configuration en U dont les extrémités des deux branches communiquent avec l'une des boîtes à fluide, de manière à être parcouru par le fluide correspondant, ce fluide étant alternativement le fluide réfrigérant et le fluide caloporteur dans la direction du flux d'air.
- L'un des premier et second évaporateurs forme, avec un premier échangeur de chaleur dans lequel circule un fluide caloporteur, un échangeur de chaleur mixte dans lequel ledit fluide réfrigérant échange de la chaleur avec ledit fluide caloporteur, ce dernier circulant également dans un second échangeur de chaleur destiné à chauffer ou à refroidir une autre zone de l'habitacle que celle recevant ledit flux d'air, et/ou dans un réservoir permettant un stockage de chaleur ou de froid.
- Le premier évaporateur, un radiateur de chauffage de l'habitacle et le second évaporateur sont traversés successivement dans cet ordre par un flux d'air à refroidir ou à réchauffer.

Les caractéristiques et avantages de l'invention seront exposés plus en détail dans la description ci-après, en se référant aux dessins annexés.

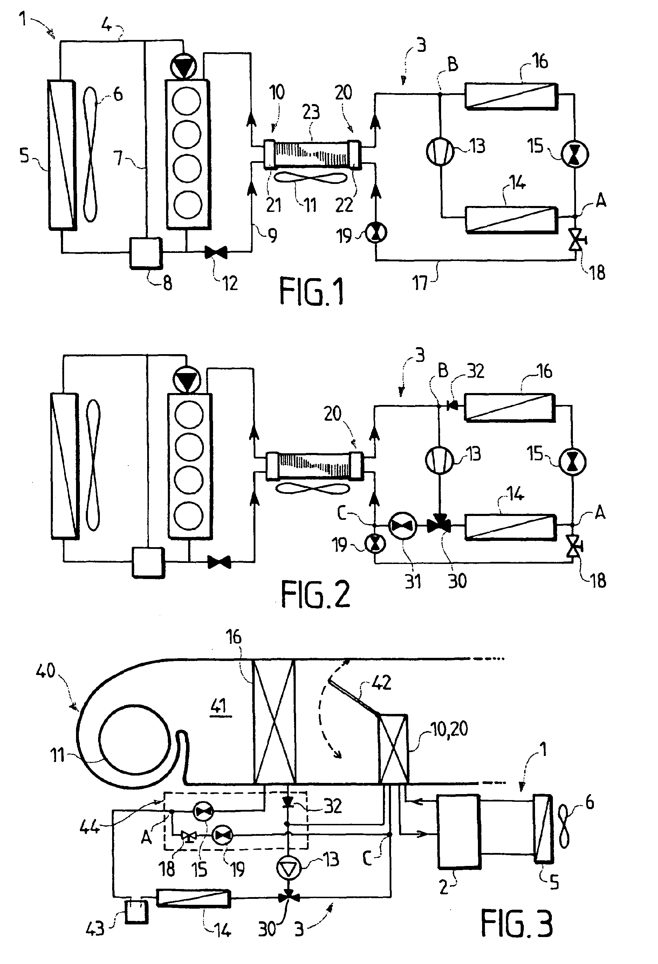

Les figures 1 à 14 sont des schémas de circuits relatifs à différents modes de réalisation d'un dispositif de climatisation selon l'invention.

La figure 1 montre un circuit 1 de fluide caloporteur servant notamment au refroidissement du moteur d'entraînement 2 ou d'une pile à combustible d'un véhicule automobile et au chauffage de l'habitacle de celui-ci, et un circuit 3 de fluide réfrigérant servant à la production de froid dans l'habitacle. Le circuit 1 comprend trois branches en parallèle entre la sortie et l'entrée du moteur 2, à savoir une première branche 4 contenant un radiateur de refroidissement 5, associé à un ventilateur 6, une seconde branche 7 permettant un retour direct du fluide au moteur lorsque celui-ci est froid, sous la commande d'un thermostat 8, et une troisième branche 9 contenant un radiateur de chauffage 10, associé à un ventilateur 11, et un robinet de réglage 12.

Le circuit 3 contient, de manière classique, un compresseur 13, un condenseur 14, un détendeur 15 et un premier évaporateur 16 destiné à extraire de la chaleur d'un flux d'air à envoyer dans l'habitacle.

Selon l'invention, à la boucle de fluide réfrigérant définie par les composants précités s'ajoute une branche supplémentaire 17 partant d'un point de jonction A situé entre le condenseur 14 et le détendeur 15, et aboutissant à un point de jonction B situé entre l'évaporateur 16 et le compresseur 13. La branche 17 contient successivement une vanne d'arrêt 18, un second détendeur 19 et un second évaporateur 20. Avantageusement, mais non nécessairement, le radiateur 10 et l'évaporateur 20 font partie d'un échangeur de chaleur mixte comprenant deux boîtes à fluide 21 et 22 disposées de part et d'autre d'un faisceau de tubes 23 et alimentées respectivement en fluide caloporteur et en fluide réfrigérant. L'échangeur 21-23 est par exemple du type décrit dans EP-A-964218, dans lequel chaque tube a une configuration en U dont les extrémités des deux branches communiquent avec l'une des boîtes à fluide, les tubes parcourus par un fluide étant disposés en alternance avec ceux parcourus par l'autre fluide, dans la direction longitudinale des boîtes à fluide.

En fonction des besoins de froid, la vanne d'arrêt 18 est soit fermée, permettant au fluide de circuler seulement dans le détendeur 15 et l'évaporateur 16, soit ouverte, permettant au fluide de circuler en parallèle dans les deux détendeurs et dans les deux évaporateurs. Dans ce dernier cas, le robinet de réglage 12 est en position fermée.

Le circuit de fluide caloporteur représenté sur les figures 2 et 4 à 6 est identique à celui de la figure 1, et ne sera donc pas décrit de nouveau. Quant au circuit 3 de fluide réfrigérant représenté sur la figure 2, il diffère de celui de la figure 1 essentiellement par l'insertion d'une vanne à trois voies 30 entre le compresseur 13 et le condenseur 14, la troisième voie de la vanne 30 étant reliée par un détendeur 31 à un point de jonction C situé sur la branche 17 entre le détendeur 19 et l'évaporateur 20. Un clapet anti-retour 32 est par ailleurs interposé entre l'évaporateur 16 et le point de jonction B, empêchant toute circulation de ce point vers l'évaporateur.

La vanne à trois voies 30 permet de mettre la sortie du compresseur 13 en communication, soit avec l'entrée du condenseur 14, soit avec celle de l'évaporateur 20, par l'intermédiaire du détendeur 31. Dans le premier cas, le circuit fonctionne de la même manière que celui de la figure 1. Dans le second cas, le compresseur, le détendeur 31 et l'évaporateur 20 forment une boucle de chauffage additionnel dans laquelle le fluide circule à l'état gazeux et l'évaporateur sert de source de chaleur, comme décrit dans FR-A-2 717 126. En fonction des besoins de chaleur ou de froid, et sous la commande des vannes 18 et 30, l'évaporateur 20 peut donc soit ne pas recevoir de fluide, soit servir de source de froid additionnelle pour une puissance frigorifique élevée, soit servir de source de chaleur d'appoint pour une puissance calorifique élevée.

La figure 3 montre un circuit 1 de fluide caloporteur semblable à celui des figures 1 et 2, dans une représentation simplifiée, un circuit 3 de fluide réfrigérant qui est une variante de celui de la figure 2, et une partie du circuit 40 du flux d'air à traiter pour être envoyé dans l'habitacle du véhicule. Le circuit 40 comprend une conduite 41 dans laquelle débouche la sortie du ventilateur 11 et dans laquelle sont disposés successivement, en aval du ventilateur, le premier évaporateur 16 et l'échangeur de chaleur mixte 10, 20, un volet pivotant 42 permettant de canaliser la totalité du flux d'air à travers l'échangeur mixte ou de laisser passer un débit variable hors de celui-ci. Le volet de réglage 42 fait ainsi varier la puissance calorifique transmise par le radiateur 10 au flux d'air, et remplace le robinet de réglage 12.

On retrouve sur la figure 3 le moteur 2 du véhicule, le radiateur de refroidissement 5 et le ventilateur associé 6. On y retrouve également tous les éléments du circuit 3 de fluide réfrigérant de la figure 2, à l'exception du détendeur 31, qui n'est pas nécessaire dans la mesure où l'évaporateur 20 est capable de supporter la pression du gaz venant du compresseur 13. Un réservoir-déshydrateur 43, omis sur les figures 1, 2 et 4 à 6, est disposé entre la sortie du condenseur 14 et le point de jonction A. Par ailleurs, un cadre en pointillé 44 entoure un certain nombre de composants du circuit 3 qui sont avantageusement réalisés sous la forme d'un module unitaire, à savoir les détendeurs 15 et 19, la vanne 18 et le clapet anti-retour 32. Le module 44 contient également les points de jonction A et B et présente des orifices d'entrée et de sortie pour son raccordement à l'entrée du compresseur 13, à la sortie du condenseur 14, à l'entrée et à la sortie de l'évaporateur 16, au point de jonction C et à la sortie de l'évaporateur 20.

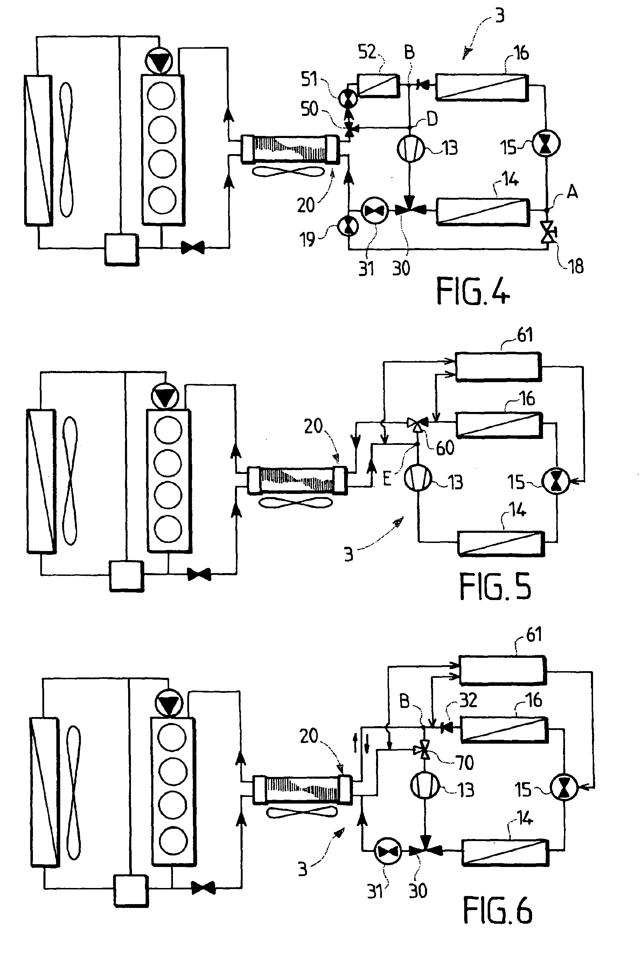

Le circuit 3 représenté sur la figure 4 diffère de celui de la figure 2 par l'adjonction des éléments suivants. Une vanne à trois voies 50, un détendeur 51 et un échangeur de chaleur complémentaire 52 sont interposés dans cet ordre entre la sortie de l'évaporateur 20 et le point de jonction B. La troisième voie de la vanne 50 est reliée à un point de jonction D situé entre le point B et l'entrée du compresseur 13. Lorsque l'évaporateur 20 est utilisé comme source de froid conjointement avec l'évaporateur 16, la vanne 50 relie sa sortie au point D, et le fonctionnement du circuit est identique à celui décrit plus haut. Lorsqu'au contraire l'évaporateur 20 est utilisé comme source de chaleur, le fluide réfrigérant circule dans le compresseur 13, dans le détendeur éventuel 31, dans l'évaporateur 20, dans le détendeur 51 et dans l'échangeur complémentaire 52, ce dernier extrayant de la chaleur d'un milieu extérieur tel que l'atmosphère à l'extérieur du véhicule ou le fluide de refroidissement du moteur, de sorte que le circuit fonctionne comme pompe à chaleur.

On retrouve sur la figure 5 la boucle de base formée par le compresseur 13, le condenseur 14, le détendeur 15 et l'évaporateur 16. Une vanne à trois voies 60 est interposée entre la sortie de l'évaporateur 16 et l'entrée du compresseur 13, sa troisième voie étant reliée à l'entrée du second évaporateur 20, tandis que la sortie de ce dernier est reliée à un point de jonction E situé entre la vanne 60 et l'entrée du compresseur. La vanne 60 peut relier la sortie de l'évaporateur 16, soit au point E, soit à l'entrée de l'évaporateur 20. Dans le premier cas, ce dernier n'est pas alimenté en fluide. Dans le second cas, il est alimenté en série avec l'évaporateur 16 et sert donc de source de froid d'appoint. Avantageusement, une unité de régulation 61 agit sur le détendeur 15 pour régler la pression et/ou le débit du fluide en fonction de la température et/ou de la pression prélevées à la sortie de l'évaporateur 16 et/ou à celle de l'évaporateur 20.

Le circuit 3 de fluide réfrigérant illustré sur la figure 6 diffère de celui de la figure 5 par la présence d'une vanne à trois voies 30, d'un détendeur 31 et d'un clapet anti-retour 32 réalisés et disposés comme dans le circuit de la figure 2. En outre, la vanne à trois voies 60 est remplacé par un simple point de jonction B et une vanne à trois voies 70 remplace le point de jonction E. Lorsque la vanne à trois voies 30 met la sortie du compresseur 13 en communication avec l'entrée du condenseur 14, le circuit fonctionne comme celui de la figure 5, selon la position de la vanne 70. Lorsque l'entrée et la sortie du compresseur 13 sont mis en communication respectivement, par les vannes 70 et 30, avec les deux extrémités de l'évaporateur 20, celui-ci sert de source de chaleur. Le sens de circulation du fluide y est alors inverse du sens de circulation lorsqu'il sert de source de froid.

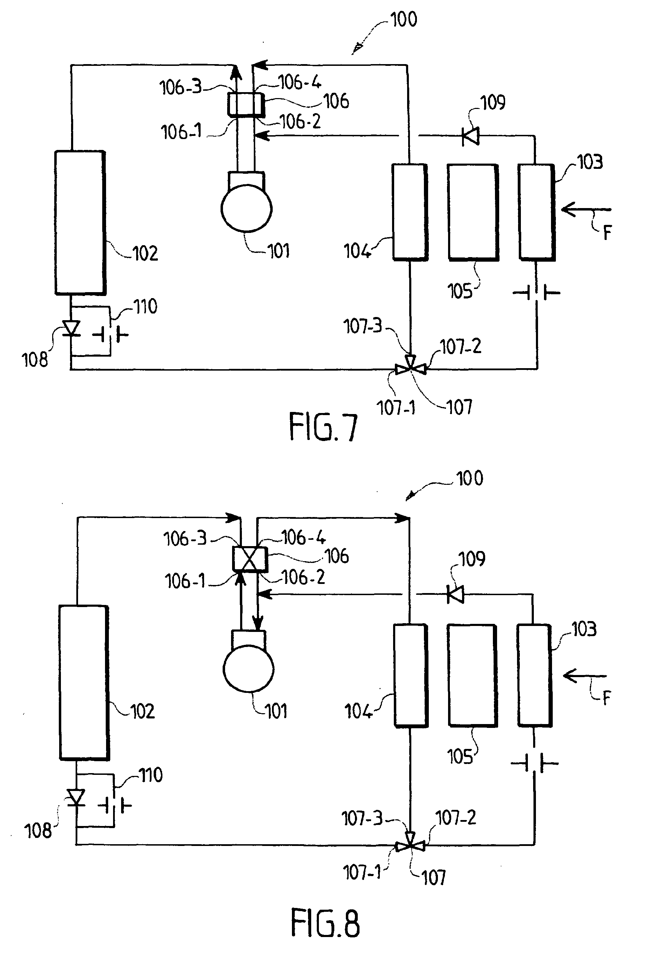

Les figures 7 et 8 montrent un circuit de fluide réfrigérant 100 comprenant un compresseur 101, un condenseur 102, un premier évaporateur 103 et un second évaporateur 104. Un radiateur de chauffage 105, indépendant dans le cas présent du second évaporateur 104, est interposé entre les premier et second évaporateurs dans le trajet d'un flux d'air F à envoyer dans l'habitacle du véhicule. Une vanne à quatre voies 106 a deux de ses voies 106-1 et 106-2 reliées respectivement à la sortie et à l'entrée du compresseur 101. Le condenseur 102 est branché entre une troisième voie 106-3 de la vanne 106 et une première voie 107-1 d'une vanne à trois voies 107. Le premier évaporateur 103 est branché entre une seconde voie 107-2 de la vanne 107 et l'entrée du compresseur, conjointement avec la voie 106-2. Enfin, le second évaporateur 104 est branché entre la troisième voie 107-3 de la vanne 107 et la quatrième voie 106-4 de la vanne 106. Des clapets anti-retour 108, 109 sont disposés entre le condenseur 102 et la vanne 107, en direction de cette dernière, et entre l'évaporateur 103 et le compresseur, en direction de ce dernier.

Dans la configuration illustrée sur la figure 7, les voies 106-1 et 106-2 de la vanne 104 sont reliées respectivement aux voies 106-3 et 106-4, et la voie 107-1 de la vanne 107 est reliée à ses deux autres voies. Le fluide sortant du compresseur circule donc dans le condenseur, puis en parallèle dans les deux évaporateurs, produisant ainsi une puissance frigorifique maximale. La voie 107-1 de la vanne 107 peut également être reliée à l'une seulement de ses sorties 107-2 et 107-3, permettant la circulation du fluide dans un seul des deux évaporateurs. L'intérêt de pouvoir alimenter au choix l'un ou l'autre des évaporateurs, en plus de pouvoir les alimenter tous deux simultanément, est double. D'une part on peut ainsi alimenter les deux évaporateurs en alternance, ce qui évite, lorsqu'on n'a pas besoin de faire fonctionner simultanément les deux évaporateurs, de maintenir un volume mort dans lequel s'accumulerait l'huile de lubrification circulant normalement avec le fluide réfrigérant. D'autre part, on peut, lorsque les deux évaporateurs ont des tailles différentes et par conséquent des capacités de refroidissement différentes, choisir à tout moment celui qui est le mieux adapté aux besoins de production de froid, ou éventuellement le mieux adapté à la quantité de fluide réfrigérant disponible en cas de sous-charge. Dans ce cas en effet, en réduisant la taille de l'évaporateur, il faut plus de temps pour obtenir la température souhaitée, mais en contrepartie on évite les problèmes de déséquilibre thermique dans l'évaporateur et par conséquent dans l'habitacle.

Dans la configuration illustrée sur la figure 8, les voies 106-1 et 106-2 de la vanne 106 sont reliées respectivement aux voies 106-4 et 106-3, et la voie 107-3 de la vanne 107 communique avec les deux autres voies 107-1 et 107-2. Le fluide sortant du compresseur 101 circule donc d'abord dans l'évaporateur 104, qui joue alors le rôle de condenseur, puis en parallèle dans le condenseur 102, qui joue alors le rôle d'évaporateur, en passant dans une conduite de dérivation 110 disposée en parallèle avec le clapet anti-retour 108, et dans l'évaporateur 103, avant de retourner au compresseur. La boucle contenant l'évaporateur 104 et le condenseur 102 fonctionne en pompe à chaleur, l'évaporateur 104 assurant un chauffage additionnel du flux d'air F. Bien que ce flux d'air soit d'abord refroidi par l'évaporateur 102 avant d'être réchauffé, cette configuration est intéressante car elle permet, ici encore, d'éviter une accumulation d'huile dans une branche morte puisque le fluide circule simultanément dans toutes les branches du circuit.

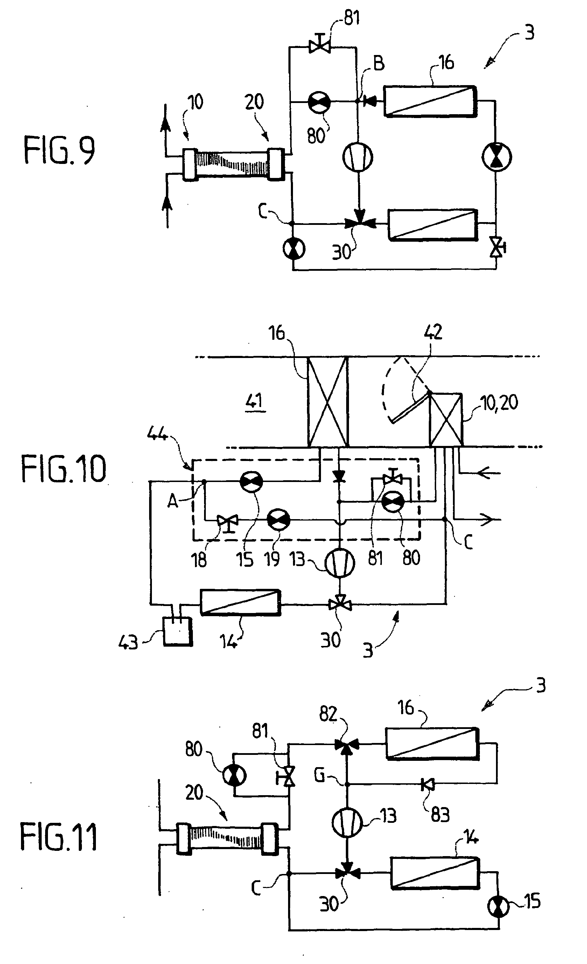

Les figures 9, 11 et 12 montrent des modes de réalisation du circuit 3 de fluide réfrigérant pouvant être utilisés à la place de ceux des figures 1 à 6.

Le circuit de la figure 9 diffère de celui de la figure 2 en ce que le détendeur 31 est remplacé par un détendeur 80 disposé entre la sortie de l'évaporateur 20 et le point de jonction B, en parallèle avec une vanne d'arrêt 81. Lorsque l'évaporateur 20 fonctionne comme source de chaleur, la vanne 81 est fermée et le fluide traverse le détendeur 80 pour assurer une détente en aval de l'évaporateur 20, évitant ainsi une surchauffe du compresseur. Lorsque l'évaporateur 20 fonctionne comme source de froid, la vanne 81 est ouverte et le fluide ne traverse pas le détendeur 80.

La figure 10 est une vue analogue à la figure 3, incorporant le circuit 3 de la figure 9, certains éléments du circuit d'air 40 étant omis. Le détendeur 80 et la vanne 81 sont inclus dans le module 44, qui se raccorde au reste du système de la même manière que celui de la figure 3.

Le circuit 3 de la figure 11 comprend une boucle de chauffage additionnel semblable à celle de la figure 9, comprenant le compresseur 13, l'évaporateur 20 et le détendeur 80 en parallèle avec la vanne 81. Dans cette boucle, ici encore, la vanne 30 est reliée d'une part à la sortie du compresseur, d'autre part à l'entrée de l'évaporateur 20, par l'intermédiaire du point de jonction C. La troisième voie de la vanne 30 est reliée à l'entrée du condenseur 14, dont la sortie est reliée au point C par l'intermédiaire du détendeur 15 de la boucle de climatisation. Une autre vanne à trois voies 82 est interposée sur la boucle de chauffage additionnel, entre la sortie du détendeur 80 et l'entrée du compresseur 13. Quant à l'évaporateur 16, il est relié d'une part à la troisième voie de la vanne 82, d'autre part à un point de jonction G situé entre la vanne 82 et l'entrée du compresseur. Un clapet anti-retour 83 permet la circulation du fluide dans l'évaporateur 16 seulement dans le sens de la vanne 82 vers le point G. Dans ce circuit, en mode climatisation, le fluide circule, soit dans le seul évaporateur 20, soit successivement dans celui-ci et dans l'évaporateur 16.

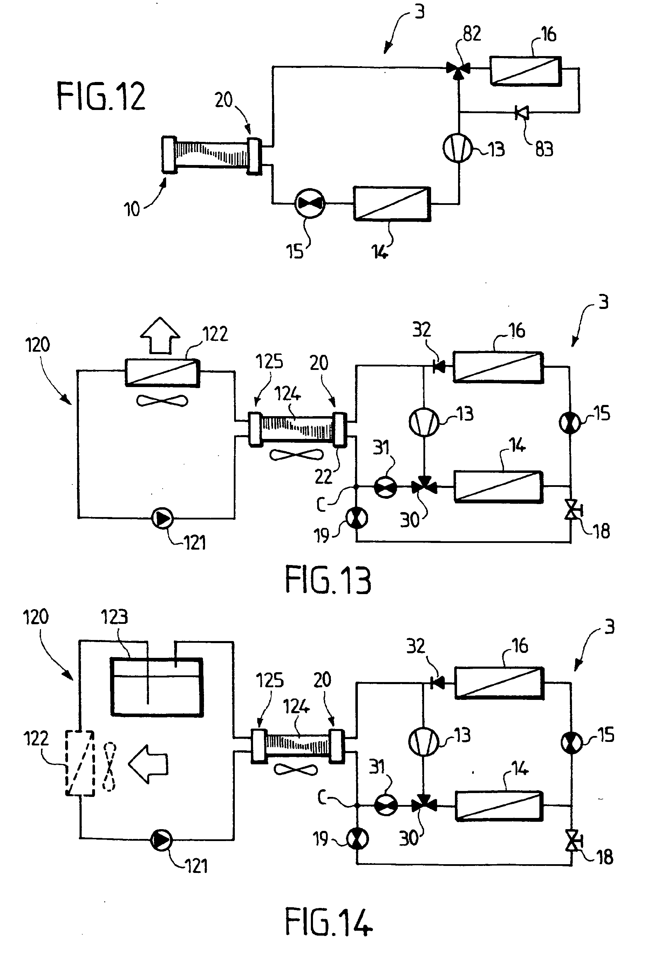

Ceci vaut également pour le circuit 3 simplifié de la figure 12, qui ne comporte pas de boucle de chauffage additionnel. Par rapport au circuit de la figure 11, le détendeur 80 et la vanne 81 sont supprimés, ainsi que la vanne 30 et la branche reliant celle-ci au point C, la sortie du compresseur étant reliée directement à l'entrée du condenseur.

Les figures 13 et 14 représentent un circuit de fluide réfrigérant 3 semblable à celui de la figure 2, associé, par l'intermédiaire d'un échangeur de chaleur mixte 124, à des circuits de fluide caloporteur différents.

Le circuit 120 de fluide caloporteur de la figure 13 est une boucle comprenant un premier échangeur de chaleur 125 qui forme avec l'évaporateur 20 l'échangeur mixte 124 dans lequel le fluide caloporteur et le fluide réfrigérant échangent de la chaleur, une pompe de circulation 121 et un autre échangeur de chaleur 122 servant à chauffer ou à refroidir une zone de l'habitacle du véhicule autre que celle où est envoyé le flux d'air traversant l'échangeur 124.

La boucle 120 de la figure 14 comprend également une pompe 121 ainsi qu'un réservoir de fluide 123 thermiquement isolé permettant de stocker de la chaleur ou du froid. Un échangeur de chaleur 122 semblable à celui de la figure 13 est prévu en option.

Chacun des circuits de fluide caloporteur des figures 1 à 6, 13 et 14 peut être associé à chacun des circuits de fluide réfrigérant des figures 1 à 6 et 12 à 14.

## Revendications

1. Dispositif de climatisation de l'habitacle d'un véhicule automobile comprenant un circuit (3) de fluide réfrigérant comportant un compresseur (13), un condenseur (14) servant de puits de chaleur et un premier évaporateur (16) servant de source de froid, ledit circuit (3) comportant un second évaporateur (20), **caractérisé en ce que** ledit circuit (3) comporte des moyens de commutation (18, 30, 60, 106)) propres à faire circuler le fluide soit seulement dans le premier évaporateur (16), soit dans les deux évaporateurs (16, 20), en fonction de la puissance frigorifique requise, les premier (16) et second (20) évaporateurs étant traversés l'un après l'autre au moins en partie par un flux d'air à refroidir et **en ce que** l'un (20) des premier et second évaporateurs (16, 20) forme, avec un radiateur (10) de chauffage de l'habitacle, un échangeur de chaleur mixte (21-23) dans lequel un flux d'air à refroidir ou à réchauffer est en contact thermique à la fois avec le fluide réfrigérant dudit circuit (3) et avec un fluide caloporteur alimentant ledit radiateur (10).

2. Dispositif selon la revendication 1, dans lequel les moyens de commutation (107) sont propres en outre à faire circuler le fluide seulement dans le second évaporateur (104).

3. Dispositif selon la revendication 2, dans lequel les moyens de commutation sont propres à faire circuler le fluide en alternance dans les premier et second évaporateurs (103, 104).

4. Dispositif selon l'une des revendications 2 et 3, dans lequel les premier et second évaporateurs ont des capacités de production de froid différentes.

5. Dispositif selon l'une des revendications précédentes, dans lequel les moyens de commutation comportent des moyens (30) pour faire circuler le fluide dans une boucle de chauffage additionnel contenant le second évaporateur et ne contenant pas le condenseur ni le premier évaporateur, le second évaporateur servant alors de source de chaleur.

6. Dispositif selon la revendication 5, dans lequel la boucle de chauffage additionnel contient, entre la sortie du second évaporateur (20) et l'entrée du condenseur (16), un détendeur (80) en parallèle avec des moyens de dérivation obturables (81) permettant au fluide de traverser ce détendeur lorsque le second évaporateur sert de source de chaleur et de l'éviter lorsque le second évaporateur sert de source de froid.

7. Dispositif selon l'une des revendications 5 et 6, dans lequel ledit circuit comporte un module unitaire (44) relié à l'entrée du compresseur, à la sortie du condenseur, à l'entrée et à la sortie du premier évaporateur, à un point de jonction extérieur (C) situé entre la sortie du compresseur et l'entrée du second évaporateur et à la sortie de ce dernier, ledit module contenant au moins un clapet anti-retour (32) disposé entre la sortie du premier évaporateur et l'entrée du compresseur, un point de jonction intérieur (A) relié à la sortie du condenseur, un premier détendeur (15) interposé entre le point de jonction intérieur et l'entrée du premier évaporateur, et une vanne d'arrêt (18) et un second détendeur (19) interposés entre le point de jonction intérieur et l'entrée du second évaporateur.

8. Dispositif selon l'une des revendications 5 à 7, dans lequel la boucle de chauffage additionnel contient en outre, entre le second évaporateur et le compresseur, un détendeur (51) suivi d'un échangeur de chaleur complémentaire (52) propre à extraire de la chaleur d'un milieu extérieur, et fonctionne comme pompe à chaleur.

9. Dispositif selon la revendication 8, dans lequel des moyens (50) sont prévus pour permettre au fluide de contourner l'échangeur de chaleur complémentaire et le détendeur associé lorsqu'il circule dans les deux évaporateurs.

10. Dispositif selon l'une des revendications 1 à 4, dans lequel les moyens de commutation (106) sont propres à faire circuler le fluide sortant du compresseur (101), d'abord dans le second évaporateur (104), qui joue alors le rôle de condenseur, puis dans deux branches en parallèle contenant respectivement le premier évaporateur (103) et le condenseur (102), qui joue alors le rôle d'évaporateur, avant de le ramener au compresseur.

11. Dispositif selon l'une des revendications précédentes, dans lequel les deux évaporateurs (16, 20) en tant que sources de froid sont disposés mutuellement en parallèle dans le circuit.

12. Dispositif selon l'une des revendications 1 à 10, dans lequel les deux évaporateurs en tant que sources de froid sont disposés mutuellement en série dans le circuit.

13. Dispositif selon la revendication 12, dans lequel le circuit comporte en outre des moyens (61, 15) pour régler le débit et/ou la pression du fluide envoyé dans les évaporateurs en fonction de la pression et/ou de la température du fluide sortant de l'un et/ou de l'autre des évaporateurs.

14. Dispositif selon l'une des revendications précédentes, dans lequel ledit échangeur de chaleur mixte comprend deux boîtes à fluide (22, 21) alimentées respectivement en fluide réfrigérant et en fluide caloporteur, situées à l'opposé l'une de l'autre par rapport à un faisceau de tubes (23), chaque tube ayant une configuration en U dont les extrémités des deux branches communiquent avec l'une des boîtes à fluide, de manière à être parcouru par le fluide correspondant, ce fluide étant alternativement le fluide réfrigérant et le fluide caloporteur dans la direction du flux d'air.

15. Dispositif selon l'une des revendications précédentes, dans lequel l'un (20) des premier et second évaporateurs forme, avec un premier échangeur de chaleur (125) dans lequel circule un fluide caloporteur, un échangeur de chaleur mixte dans lequel ledit fluide réfrigérant échange de la chaleur avec ledit fluide caloporteur, ce dernier circulant également dans un second échangeur de chaleur (122) destiné à chauffer ou à refroidir une autre zone de l'habitacle que celle recevant ledit flux d'air, et/ou dans un réservoir (123) permettant un stockage de chaleur ou de froid.

16. Dispositif selon l'une des revendications 1 à 13, dans lequel le premier évaporateur (103), un radiateur (105) de chauffage de l'habitacle et le second évaporateur (104) sont traversés successivement dans cet ordre par un flux d'air (F) à refroidir ou à réchauffer.

## Claims

1. Device for air conditioning the interior of a motor vehicle comprising a refrigerant circuit (3) comprising a compressor (13), a condenser (14) acting as a heat sink and a first evaporator (16) acting a cold source, the said circuit (3) comprising a second evaporator (20), **characterized in that** the said circuit (3) comprises switching means (18, 30, 60, 106) able to cause the fluid to flow either only through the first evaporator (16) or through both evaporators (16, 20) according to the cooling capacity required, the first (16) and second (20) evaporators having a flow of air that is to be cooled passing at least in part through them one after the other, and **in that** one (20) of the first and second evaporators (16, 20) forms, with a radiator (10) used for heating the interior, a hybrid heat exchanger (21-23) in which a flow of air that is to be cooled or heated is in thermal contact both with the refrigerant of the said circuit (3) and with a heat-transfer fluid supplied to the said radiator (10).

2. Device according to Claim 1, in which the switching means (107) are also capable of causing the fluid to flow only through the second evaporator (104).

3. Device according to Claim 2, in which the switching means are capable of causing the fluid to flow alternately through the first and second evaporators (103, 104).

4. Device according to one of Claims 2 and 3, in which the first and second evaporators have different capacities to produce cold.

5. Device according to one of the preceding claims, in which the switching means comprise means (30) for causing the fluid to flow through an additional heating loop containing the second evaporator and containing neither the condenser nor the first evaporator, the second evaporator then acting as a heat source.

6. Device according to Claim 5, in which the additional heating loop contains, between the outlet of the second evaporator (20) and the inlet of the condenser (16), an expansion valve (80) in parallel with bypass means (81) that can be closed off, allowing the fluid to pass through this expansion valve when the second evaporator is acting as a heat source and allowing it to avoid same when the second evaporator is acting as a cold source.

7. Device according to one of Claims 5 and 6, in which the said circuit comprises an individual module (44) connected to the inlet of the compressor, to the outlet of the condenser, to the inlet and to the outlet of the first evaporator, at an external junction point (C) situated between the outlet of the compressor and the inlet of the second evaporator and to the outlet of the latter, the said module containing at least one nonreturn valve (32) positioned between the outlet of the first evaporator and the inlet of the compressor, an internal junction point (A) connected to the outlet of the condenser, a first expansion valve (15) interposed between the internal junction point and the inlet of the first evaporator, a shut-off valve (18) and a second expansion valve (19) which are interposed between the internal junction point and the inlet of the second evaporator.

8. Device according to one of Claims 5 to 7, in which the additional heating loop further contains, between the second evaporator and the compressor, an expansion valve (51) followed by an additional heat exchanger (52) able to extract heat from external surroundings, and operates as a heat pump.

9. Device according to Claim 8, in which means (50) are provided to allow the fluid to bypass the additional heat exchanger and the associated expansion valve when flowing through the two evaporators.

10. Device according to one of Claims 1 to 4, in which the switching means (106) are able to cause the fluid leaving the compressor (101) to flow first of all through the second evaporator (104), which then acts as a condenser, then through two parallel branches respectively containing the first evaporator (103) and the condenser (102), which then acts as an evaporator, before returning it to the compressor.

11. Device according to one of the preceding claims, in which the two evaporators (16, 20) by way of cold sources are arranged in parallel with one another in the circuit.

12. Device according to one of Claims 1 to 10, in which the two evaporators by way of cold sources are arranged in series with one another in the circuit.

13. Device according to Claim 12, in which the circuit further comprises means (61, 15) for regulating the flow rate and/or the pressure of the fluid sent through the evaporators according to the pressure and/or the temperature of the fluid leaving one and/or the other of the evaporators.

14. Device according to one of the preceding claims, in which the said hybrid heat exchanger comprises two header tanks (22, 21) supplied respectively with refrigerant and with heat-transfer fluid, situated opposite one another with respect to a tube bundle (23), each tube having a U-configuration the ends of the two branches of which communicate with one of the header tanks so that the corresponding fluid can pass through, this fluid being, alternately, the refrigerant and the heat-transfer fluid in the direction of the air flow.

15. Device according to one of the preceding claims, in which one (20) of the first and second evaporators forms, with a first heat exchanger (125) through which a heat-transfer fluid flows, a hybrid heat exchanger in which the said refrigerant exchanges heat with the said heat-transfer fluid, the latter also flowing through a second heat exchanger (122) intended to heat or cool another region of the interior than the one that receives the said air flow and/or into a reservoir (123) able to store heat or cold.

16. Device according to one of Claims 1 to 13, in which the first evaporator (103), a radiator (105) for heating the interior and the second evaporator (104) have a flow (F) of air that is to be cooled or to be heated passing through them in succession in that order.

## Patentansprüche

1. Vorrichtung zur Klimasteuerung im Innenraum eines Kraftfahrzeugs, mit einem Kühlfluidkreislauf (3), der einen Kompressor (13), einen als Wärmesenke dienenden Verflüssiger (14) und einen als Kältequelle dienenden ersten Verdampfer (16) aufweist, wobei der Kreislauf (3) einen zweiten Verdampfer (20) aufweist, **dadurch gekennzeichnet, dass** der Kreislauf (3) Umschaltmittel (18, 30, 60, 106)) aufweist, die geeignet sind, um das Fluid je nach der erforderlichen Kälteleistung entweder nur im ersten Verdampfer (16) oder in den zwei Verdampfern (16, 20) fließen zu lassen, wobei der erste (16) und der zweite (20) Verdampfer nacheinander zumindest zum Teil von einem zu kühlenden Luftstrom durchquert werden, und dass einer (20) der ersten und zweiten Verdampfer (16, 20) mit einem Heizkörper (10) des Innenraums einen Mischwärmetauscher (21-23) bildet, in dem ein zu kühlender oder zu erwärmender Luftstrom gleichzeitig mit dem Kühlfluid des Kreislaufs (3) und mit einem den Heizkörper (10) speisenden Wärmeträgerfluid in thermischem Kontakt ist.

2. Vorrichtung nach Anspruch 1, bei der die Umschaltmittel (107) außerdem das Fluid nur im zweiten Verdampfer (104) fließen lassen können.

3. Vorrichtung nach Anspruch 2, bei der die Umschaltmittel das Fluid abwechselnd im ersten und im zweiten Verdampfer (103, 104) fließen lassen können.

4. Vorrichtung nach einem der Ansprüche 2 und 3, bei der der erste und der zweite Verdampfer unterschiedliche Kälteerzeugungsleistungen haben.

5. Vorrichtung nach einem der vorhergehenden Ansprüche, bei der die Umschaltmittel Mittel (30) aufweisen, um das Fluid in einer zusätzlichen Heizschleife fließen zu lassen, die den zweiten Verdampfer enthält und weder den Verflüssiger noch den ersten Verdampfer enthält, wobei der zweite Verdampfer dann als Wärmequelle dient.

6. Vorrichtung nach Anspruch 5, bei der die zusätzliche Heizschleife zwischen dem Ausgang des zweiten Verdampfers (20) und dem Eingang des Verflüssigers (16) ein Expansionsventil (80) parallel zu verschließbaren Abzweigmitteln (81) aufweist, die es dem Fluid ermöglichen, dieses Expansionsventil zu durchqueren, wenn der zweite Verdampfer als Wärmequelle dient, und es zu umgehen, wenn der zweite Verdampfer als Kältequelle dient.

7. Vorrichtung nach einem der Ansprüche 5 und 6, bei der der Kreislauf ein Einheitsmodul (44) aufweist, das mit dem Eingang des Kompressors, mit dem Ausgang des Verflüssigers, mit dem Eingang und mit dem Ausgang des ersten Verdampfers, mit einem externen Verbindungspunkt (C), der sich zwischen dem Ausgang des Kompressors und dem Eingang des zweiten Verdampfers befindet, und mit dem Ausgang dieses letzteren verbunden ist, wobei das Modul mindestens ein Rückschlagventil (32), das zwischen dem Ausgang des ersten Verdampfers und dem Eingang des Kompressors angeordnet ist, einen internen Verbindungspunkt (A), der mit dem Ausgang des Verflüssigers verbunden ist, ein erstes Expansionsventil (15), das zwischen den internen Verbindungspunkt und den Eingang des ersten Verdampfers eingefügt ist, und einen Absperrschieber (18) und ein zweites Expansionsventil (19) enthält, die zwischen den internen Verbindungspunkt und den Eingang des zweiten Verdampfers eingefügt sind.

8. Vorrichtung nach einem der Ansprüche 5 bis 7, bei der die zusätzliche Heizschleife außerdem zwischen dem zweiten Verdampfer und dem Kompressor ein Expansionsventil (51) gefolgt von einem komplementären Wärmetauscher (52) enthält, der geeignet ist, um Wärme aus einem externen Medium zu entziehen, und als Wärmepumpe arbeitet.

9. Vorrichtung nach Anspruch 8, bei der Mittel (50) vorgesehen sind, um es dem Fluid zu ermöglichen, den komplementären Wärmetauscher und das zugeordnete Expansionsventil zu umgehen, wenn es in den zwei Verdampfern fließt.

10. Vorrichtung nach einem der Ansprüche 1 bis 4, bei der die Umschaltmittel (106) geeignet sind, um das aus dem Kompressor (101) austretende Fluid zuerst in dem zweiten Verdampfer (104), der dann die Aufgabe eines Verflüssigers übernimmt, dann in zwei parallelen Zweigen, die den ersten Verdampfer (103) bzw. den Verflüssiger (102) enthalten, der dann die Aufgabe eines Verdampfers übernimmt, fließen zu lassen, ehe es zum Kompressor zurückgeführt wird.

11. Vorrichtung nach einem der vorhergehenden Ansprüche, bei der die zwei Verdampfer (16, 20) als Kältequellen parallel zueinander im Kreislauf angeordnet sind.

12. Vorrichtung nach einem der Ansprüche 1 bis 10, bei der die zwei Verdampfer als Kältequellen in Reihe zueinander im Kreislauf angeordnet sind.

13. Vorrichtung nach Anspruch 12, bei der der Kreislauf außerdem Mittel (61, 15) aufweist, um den Durchsatz und/oder den Druck des in die Verdampfer geschickten Fluids in Abhängigkeit von dem Druck und/oder der Temperatur des aus dem einen und/oder dem anderen der Verdampfer austretenden Fluids zu regeln.

14. Vorrichtung nach einem der vorhergehenden Ansprüche, bei der der Mischwärmetauscher zwei mit Kühlfluid bzw. mit Wärmeträgerfluid gespeiste Fluidkästen (22, 21) enthält, die bezüglich eines Rohrbündels (23) einander gegenüber angeordnet sind, wobei jedes Rohr die Konfiguration eines U hat, dessen Enden der zwei Schenkel mit einem der Fluidkästen in Verbindung stehen, um von dem entsprechenden Fluid durchflossen zu werden, wobei dieses Fluid abwechselnd das Kühlfluid und das Wärmeträgerfluid in Richtung des Luftstroms ist.

15. Vorrichtung nach einem der vorhergehenden Ansprüche, bei der einer (20) der ersten und zweiten Verdampfer mit einem ersten Wärmetauscher (125), in dem ein Wärmeträgerfluid fließt, einen Mischwärmetauscher bildet, in dem das Kühlfluid mit dem Wärmeträgerfluid Wärme tauscht, wobei letzteres ebenfalls in einem zweiten Wärmetauscher (122) fließt, der dazu bestimmt ist, eine andere Zone des Innenraums als diejenige, die den Luftstrom empfängt, zu heizen oder zu kühlen, und/oder in einem Behälter (123) fließt, der ein Wärme- oder Kältespeichern erlaubt.

16. Vorrichtung nach einem der Ansprüche 1 bis 13, bei der der erste Verdampfer (103), ein Heizkörper (105) des Innenraums und der zweite Verdampfer (104) nacheinander in dieser Reihenfolge von einem zu kühlenden oder zu erwärmenden Luftstrom (F) durchquert werden.
